# EUROPEAN PATENT APPLICATION

(11) **EP 3 246 100 A1**
(43) Date of publication of application: **22.11.2017**
(21) Application number: 16170383.0
(22) Date of filing: 19.05.2016
(51) Int. Cl.: B07C 3/20, G06F 9/50

(54) **ALLOCATING THE RUNNING OF RECOGNITION SERVICES IN A LOGISTICAL AUTOMATION SYSTEM**

(71) Applicant: Siemens Aktiengesellschaft, 80333 München (DE)
(72) Inventor: ZETTLER, Michael, 78476 Allensbach (DE)
(74) Representative: Maier, Daniel Oliver

(57) **Abstract**

A method and system for allocating the running of recognition services required by a logistical automation system, wherein recognition services are required to be run for extracting relevant logistical information data from logistical items processed by logistical processing machines, comprising: providing a capability of using a set of computer nodes as a pool for running recognition services; providing a capability of using a cloud for running recognition services, providing a cloud manager for allocating the running of recognition services between the node pool and the cloud; and, during operation, running at least some of the required recognition services in the cloud, in accordance with allocating instructions provided by the cloud-manager.

## Description

The present invention relates to a method and to a system for allocating where to run recognition services according to the preamble of claims 1 and 10 respectively.

In the field of postal logistics, postal automation systems support postal operators in achieving their delivery performance goals. In the field of airport logistics, baggage handling systems improve the efficiency of baggage transportation.

For example, in postal logistics, a key phase of the postal logistics chain is the processing and the sorting of postal items, usually performed in sorting centers at the postal operator sites. State of the art postal automation systems for processing and sorting postal items include a mix of hardware and software solutions. As used herein, the terms "postal items" are used to denote mail items, such as letters and flats, parcels and similar physical items which are to be delivered by the postal operators.

In sorting centers of postal operators, the usual tasks of mail or postal processing machines are the processing and the sorting of collected mail items by elaborating and gathering their mail information data. Sorting and sequencing mail machines are typically required to run recognition services for extracting mail information data from the mail items under process. As used herein, the terms "recognition services" denote the broad range of services required for mail sorting and identification purposes and they include, but are not limited to, OCR (Optical Character Recognition) services, VCS (Video Coding Systems) services, bar-code reading, fingerprint services, and/or other relevant reading, identification, classification and/or coding services in the postal automation field.

In a typical state of the art scenario, a set of mail processing machines located at the postal operator site request the running of recognition services to a pool of computer nodes where the relevant requested recognition services such as e.g. OCR and VCS services are performed. Such computer node pool is typically located locally at the postal operator side, but, as those skilled in the art know, they may also be remotely located through a network connection.

The dimensioning of the required number of machines and computer nodes is a critical task for postal operators. In fact, in order to ensure quality of service, postal service operators have to fulfil minimum delivery performance goals. However, hardware dimensioning is not a straightforward task since the demand for their postal services has a highly variable load throughout the year.

For example, it is often the case that, at postal operators, after hardware dimensioning, a variance in equipment load between 50% and 200% may easily be observed.

In one typical scenario, in order to meet their delivery performance goals, postal operators may dimension the machinery and the related OCR and VCS computer node hardware to fit the high load scenario. In such a case, the OCR and VCS systems of large postal operators consist countrywide of hundreds of computer nodes dimensioned for the maximum load, as for example during the peak load occurring during Christmas time.

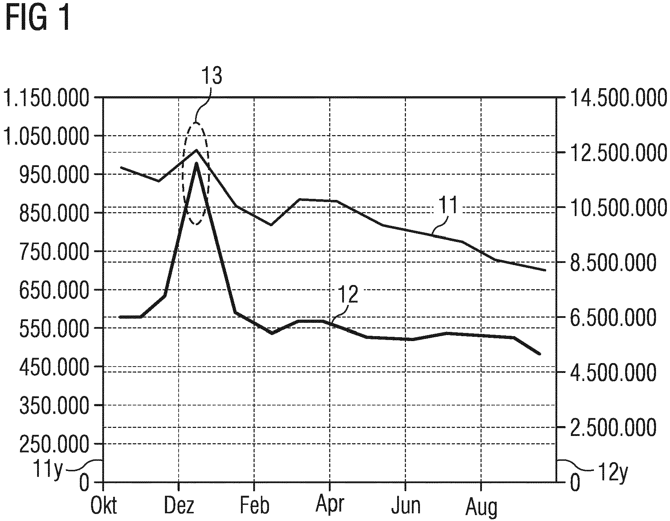

Figure 1 is a graph diagram schematically illustrating an example of mail item load variability throughout a fiscal year. In this example, the mail items handled by the postal operator are letters and flats. The flat graph 11 plots the number of flats (left vertical axis 11y) handled throughout the year (horizontal axis). The letter graph 12 plots the number (right vertical axis 12y) of letters handled throughout the year (horizontal axis). The load peak 13 is encountered in December around the Christmas period. It can also be seen that letters experience a higher variable load than flats.

Unfortunately, by dimensioning the number of computer nodes to fit the maximum load, the postal operators have to invest in acquiring expensive computer resources that are only partially utilized throughout the year. Moreover, such computer nodes, even if over-dimensioned, do still require high maintenance costs.

As those skilled in the art know, in the field of airport baggage logistics, baggage and transported goods require recognition services for extracting relevant logistical information data from the transported goods. As used herein, the terms "logistical items" are used to denote both the postal logistic items such as, e.g., postal items, such as mail items and parcels, and the airport baggage logistic items such as, e.g., baggage and transported goods. As used herein, the term "logistical automation systems" is used to denote postal automation systems, parcel automation systems, baggage handling systems and similar systems in the field of postal and airport baggage logistics.

It is therefore aim of the present invention to overcome the above mention drawbacks, in particular by providing a method and system for allocating where to run recognition services in a logistical automation system, providing a desired compromise between the dimensioning of computer nodes and the need to fulfill logistical delivery performance goals.

The aforementioned aim is achieved by a method and system for allocating the running of recognition services required by a logistical automation system, wherein recognition services are required to be run for extracting relevant logistical information data from logistical items processed by logistical processing machines, comprising:
a) providing a capability of using a set of computer nodes as a pool for running recognition services;
b) providing a capability of using a cloud for running recognition services,
c) providing a cloud manager for allocating the running of recognition services between the node pool and the cloud;
d) during operation, running at least some of the required recognition services in the cloud, in accordance with allocating instructions provided by the cloud-manager.

In invention embodiments, the set of computer nodes of the node pool may be advantageously dimensioned in order to match a load which is circa comprised between an estimate of the minimum load and an estimate of the average load.

In invention embodiments, the node pool may preferably be located at the logistical operator side or in a remote network.

In invention embodiments, additional computer nodes may conveniently be added to the node pool.

In invention embodiments, the recognition services may advantageously be selected from the group consisting of:
- OCR services;
- VCS services;
- fingerprint services;
- learning directory services;
- network item flow manager services; and
- recognition of a IATA tag barcode.

In invention embodiments, the logistical automation system may be a postal automation system or a baggage handling system.

In invention embodiments, the logistical processing machine may be a mail processing machine or a baggage processing machine.

In invention embodiments, the allocating instructions by the cloud manager may be based on calculations including one or more of the following allocating criteria:
- defined levels of throughput;
- defined levels of latency;
- online versus offline services;
- multi-dimensional optimization of a plurality of allocating criteria.

In invention embodiments, the allocating criteria may be conveniently configured via a Graphical User Interface. Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the invention enable to use cloud capacities to get the needed computer nodes on demand from the cloud in an elastic manner. Advantageously, cloud nodes increase and shrink based on some defined allocation criteria such as actual load on the dimensioned hardware node pool, performance levels and/or others.

Embodiments of the invention provide a flexible approach by enabling auto scaling in the cloud on demand; e.g. with a pay per use approach.

Embodiments of the invention enable to define customer specific criteria for assigning the allocation of recognition services to be run.

Embodiments of the invention enable to add hardware on demand to flexible fulfill customer requirements relating to specific higher performances or near-real time functionalities.

Embodiments of the invention enable to achieve an optimized balance between hardware costs and the desired performances of computation power.

Embodiments of the invention enable to reduce hardware of computer nodes in the pool in order to achieve reduction of hardware investment and of maintenance and repair costs.

Embodiments of the invention enable to achieve a reliable capacity management by covering also overload peak scenarios.

The invention will now be described in preferred but not exclusive embodiments with reference to the accompanying drawings, wherein:
- Figure 1: is a graph diagram schematically illustrating an example of mail item load variability throughout a fiscal year.
- Figure 2: is a block diagram schematically illustrating architectural interactions in a postal automation system according to an example embodiment of the present invention.
- Figure 3: is a flowchart diagram schematically illustrating a flowchart of a method for allocating where to run recognition services in a logistical automation system in accordance with disclosed embodiments.

At least some embodiments of the present invention address the above described issue in which a method or system is allocating where to run recognition services in a logistical automation system.

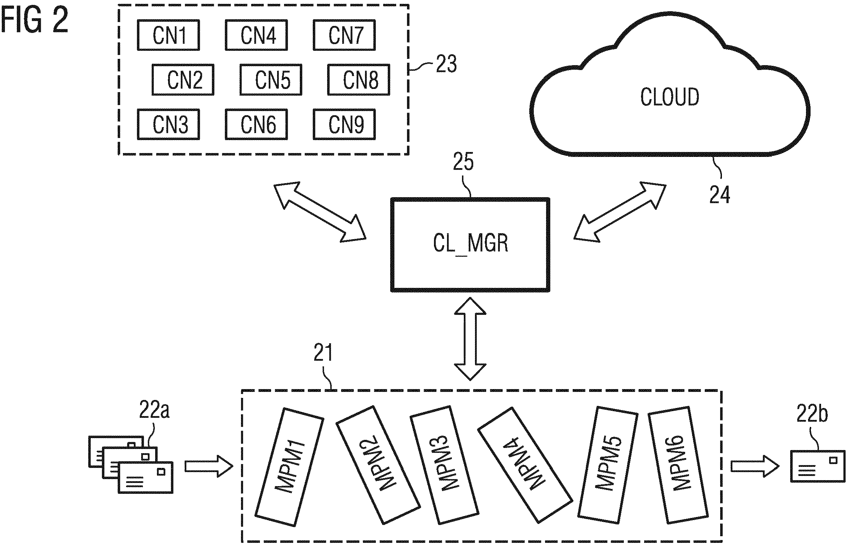

Figure 2 is a block diagram schematically illustrating architectural interactions in a postal automation system according to an example embodiment of the present invention.

The inputs of the mail processing machine chain 21 are unsorted mail items 22a. The outputs of the mail processing machine chain 21 are sorted mail items 22b, which are usually sorted in a tailored manner to fit at best the mail carrier route. During the processing of the mail items 22a, 22b, the mail machines require to elaborate, extract, receive and/or identify some specific mail identification and information data, useful for an efficient sorting of the mail items. Such mail information data is typically obtained by requesting the running of recognition services.

In one example embodiment, unsorted mail items 22a enter the mail processing machine chain 21 including various mail processing machines such as e.g. sorting machines, sequencing machines, and other machine types. For example, a first sorting machine may sort the mail items according to the recognized area code. A second sorting machine, after having recognized an address with requested OCR services, prints an ID Tag in form of a barcode. When mail information data cannot be recognized with OCR services, VCS services may be requested. Recognized addresses usually have to be matched with data of an address directory. Other mail processing machines in the processing machine chain 21 may include a sequencing machine requiring usually a few iterations in order to sort the mail items 22a, 22b in a tailored manner according to the carrier route.

Recognition services may include one or more of the following: OCR services, VCS services, fingerprint services, learning directory services, network item flow manager, reading and coding services and other services. Learning directory require data storage of updated addresses to be maintained which can be used by OCR systems, VCS systems and/or other recognition service systems. The network item flow manager, which is used to manage item flow country wide between sites, may typically require a data storage with data records for each physical mail item. In the field of airport baggage logistics, recognition services may also include, but not limited to, recognition of the barcode available on so called IATA tags, recognition of the destination airport of an item or the name of the passenger the item belongs to.

According to embodiments of the invention, advantageously, during operation, recognition services may be run in the node pool 23 or in the cloud 24 on demand. When run in the cloud 24, the recognition services may thus become software as a Service (SaaS), on a pay-per-use approach. A cloud manager is provided for providing allocation instructions on where to run recognition services between the node pool 23 and the cloud 24.

The pool of computer nodes 23 may preferably be located locally at the operator side. In other embodiments, the node pool 23 is physically located in a remote network.

According to some preferred embodiments, the set of computer nodes of the node pool 23 is dimensioned in order to match a load which is circa comprised between an estimate of the minimum load and an estimate of the average load. Advantageously, hardware investment costs and hardware maintenance costs are reduced.

In the example embodiment of Figure 2, assume that the six mail processing machines of the mail processing chain 21 require circa one and half computer nodes per machine during the minimum load period, up to three computer nodes per machine at the Christmas time peak. With invention embodiment, one may dimension the computer nodes of the node pool 23 to fit the minimum load to nine computer nodes so that, advantageously, the node hardware is reduced of 50%.

In order to flexibly fit performance based requirements, in an advantageous embodiment, additional computer nodes may be added to the pool of nodes 23.

According to one embodiment, the cloud manager 25 provides allocation instructions based on calculation results of defined allocating algorithms. Such allocating algorithms may be based on a large variety of defined parameters and/or allocation criteria. In embodiments, examples of defined allocation algorithms may include, but not be limited to, algorithms based on defined levels of throughput, on defined levels of latency, on costs of cloud services, on processing delays and/or their associated costs. Other examples of allocation criteria may be based on online services, allocated e.g. on the pool node 23, versus offline services, allocated e.g. on the cloud 24. Examples of online services may include, but not limited to, basic sorting and similar ones; examples of offline services may include, but not limited to, recognition of the sender, validity of a stamp, forwarding process and other ones. Other examples of allocation criteria may be based on printed address, allocated e.g. on the pool node 23, versus handwritten address, allocated e.g. on the cloud 24. Other embodiments include any multidimensional optimization of at least two of the above mentioned parameters and/or allocation criteria.

In other embodiments in the field of airport baggage logistics, allocation criteria may include, but not limited to, transit time duration, start or end point of travel, travel class of the passenger.

In some embodiments, the defined parameters and allocation criteria may be configured by the logistical operator according to its service definition requirements. Advantageously, allocation criteria that are customer specific may be configured. The logistical operator may be the postal operator or the baggage handling operator.

In embodiments, the configurable parameters and allocation criteria, may be located on the cloud 24 and may be modified through a Graphical User Interface (GUI). In other embodiments, the parameters may be configured at the logistical operator side. In one embodiment, the GUI may preferably be within the postal operator IT system (not shown). In such an embodiment, the postal operator may easily and conveniently configure its preferences, also taking into account interactions with internal IT systems such as, e.g., ERP systems, supply chain management systems, enterprise reporting systems, finance systems and other company internal software planning and simulation systems.

In some embodiments, the GUI may be web-based or it may be based on java.

In some embodiments, algorithm calculations may preferably be performed on the cloud or on local or remote resources so that, advantageously, the resources of the internal IT system of the logistical operator are not impacted.

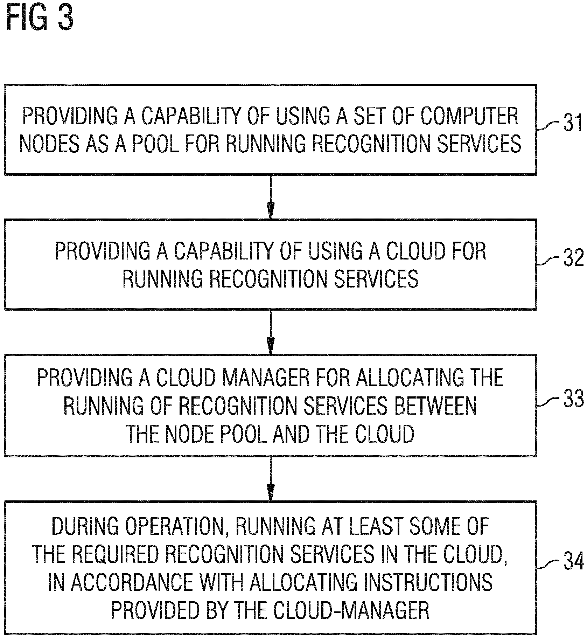

Figure 3 is a flowchart schematically illustrating a flowchart of a method for allocating where to run recognition services in a logistical automation system in accordance with disclosed embodiments.

Logistical processing machines 21 at a logistical operator side are requiring recognition services to be run for extracting logistical information data from logistical items 22a, 22b processed by logistical processing machines, which may be usually be located at a logistical operator side.

At step 31, it is provided a capability of using a set of computer nodes 21 as a pool for running recognition services.

At step 32, it is provided a capability of using a cloud 24 in which recognition services can be run. For example, such recognition services can be run on the cloud 24 as SaaS on demand on a pay per use basis.

At step 33, it provided a cloud manager 25 for allocating where to run recognition services between the node pool 23 and the cloud 24.

At step 34, during operation, at least some of the required recognition services are run in the cloud 24, in accordance with allocating instructions provided by the cloud-manager 25.

### List of used acronyms

- IATA: International Air Transport Association
- IT: Information Technology
- ERP: Enterprise Resource Planning
- OCR: Optical Character Recognition
- SaaS: Software as a Service
- VCS: Video Coding System

### List of used reference signs

- 11: graph of flats
- 11y: left vertical axis for flats
- 12: graph of letters
- 12y: right vertical axis for letters
- 13: load peak
- 21: chain of mail processing machines
- 22a, 22b: unsorted and sorted mail items
- 23: pool of computer nodes
- 24: cloud
- 25: cloud manager
- 31, 32, 33, 34: flowchart steps

## Claims

1. Method for allocating the running of recognition services required by a logistical automation system, wherein recognition services are required to be run for extracting relevant logistical information data from logistical items (22a, 22b) processed by logistical processing machines, the method comprising the following steps:
a) providing (31) a capability of using a set of computer nodes (23) as a pool for running recognition services;
b) providing (32) a capability of using a cloud (24) for running recognition services,
c) providing (33) a cloud manager (25) for allocating the running of recognition services between the node pool (23) and the cloud (24);
d) during operation, running at least some of the required recognition services in the cloud, in accordance with allocating instructions provided by the cloud-manager (25).

2. The method according to claim 1, wherein the set of computer nodes of the node pool (23) is dimensioned in order to match a load which is circa comprised between an estimate of the minimum load and an estimate of the average load.

3. The method according to claim 1 or 2, wherein the node pool (23) is located at the logistical operator side or in a remote network.

4. The method according to any of the previous claims, wherein additional computer nodes are added to the node pool (23).

5. The method according to any of the previous claims, wherein the recognition services are selected from the group consisting of:
- OCR services;
- VCS services;
- fingerprint services;
- learning directory services;
- network item flow manager services; and,
- recognition of a IATA tag barcode.

6. The method according to any of the previous claims, wherein the logistical automation system is a postal automation system or a baggage handling system.

7. The method according to any of the previous claims, allocating instructions of the cloud manager (25) are based on calculations including one or more of the following allocating criteria:
- defined levels of throughput;
- defined levels of latency;
- online versus offline services;
- multi-dimensional optimization of a plurality of allocating criteria.

8. The method according to any of the previous claims, wherein the allocating criteria are configured via a Graphical User Interface.

9. The method according to any of the previous **characterized in that** it is implemented in software.

10. A system for allocating the running of recognition services a logistical automation system, wherein recognition services are required to be run for extracting relevant logistical information data from logistical items (22a, 22b) processed by logistical processing machines, the system comprising the following:
a) means for providing (31) a capability of using a set of computer nodes (23) as a pool for running recognition services;
b) means for providing (32) a capability of using a cloud (24) for running recognition services,
c) means for providing (33) a cloud manager (25) for allocating the running of recognition services between the node pool (23) and the cloud (24);
d) means for running (34), during operation, at least some of the required recognition services in the cloud, in accordance with allocating instructions provided by the cloud-manager (25).
